# EUROPÄISCHE PATENTSCHRIFT

(11) **EP 2 422 103 B1**
(45) Veröffentlichungstag und Bekanntmachung des Hinweises auf die Patenterteilung: **27.08.2014**
(21) Anmeldenummer: 10700387.3
(22) Anmeldetag: 15.01.2010
(51) Int. Cl.: F16D 27/112, F16D 27/14

(54) **VERFAHREN ZUR HERSTELLUNG VON KUPPLUNGS- UND BREMSSCHEIBEN FÜR ELEKTROMAGNETKUPPLUNGEN ODER ELEKTROMAGNETBREMSEN MIT MINDESTENS EINEM REIBFLÄCHENELEMENT**
METHOD FOR PRODUCING CLUTCH AND BRAKE DISCS FOR ELECTROMAGNETIC CLUTCHES OR ELECTROMAGNETIC BRAKES HAVING AT LEAST ONE FRICTION SURFACE ELEMENT
PROCÉDÉ DE FABRICATION DE DISQUES D'EMBRAYAGE ET DE FREIN POUR EMBRAYAGES ÉLECTROMAGNÉTIQUES OU FREINS ÉLECTROMAGNÉTIQUES PRÉSENTANT AU MOINS UN ÉLÉMENT À SURFACE DE FRICTION

(30) Priorität: 24.04.2009 DE 102009018559
(43) Veröffentlichungstag der Anmeldung: 29.02.2012
(73) Patentinhaber: Kendrion Linnig GmbH, 88677 Markdorf (DE)
(72) Erfinder: GEBHART, Manfred, 78462 Konstanz (DE)
(74) Vertreter: Dobler, Markus
(86) Internationale Anmeldenummer: PCT/EP2010/000183
(87) Internationale Veröffentlichungsnummer: WO 2010/121677

(56) Entgegenhaltungen:
- EP-A1- 1 116 895
- GB-A- 769 162
- US-A1- 2003 051 961
- US-A1- 2003 164 277

## Beschreibung

Die Erfindung betrifft ein Verfahren zur Herstellung von Kupplungs- und/oder Bremsscheiben für Elektromagnetkupplungen und/oder Elektromagnetbremsen mit mindestens einem Reibflächenelement, das vom magnetischen Feld durchflutet wird, nach dem Anspruchs 1.

### Stand der Technik

Den verschiedenen Bauformen von Reibflächenelementen, z.B. Rotoren und Ankerscheiben, in Elektromagnetkupplungen bzw. Elektromagnetbremsen entsprechend wurde bereits eine Reihe unterschiedlicher Verfahren zur ihrer Herstellung vorgeschlagen. Für eine wirtschaftliche Herstellung wird häufig die Konstruktion eines Reibflächenelements auf möglichst wenige Teile, aus denen es sich zusammensetzt, zugeschnitten. Beispielweise werden Reibflächenelemente zu einem wesentlichen Teil oder als ganzes aus weichmagnetischem Stahlblech durch eine Kombination aus Stanzen und Pressen in eine ihrer Funktion entsprechenden Form gebracht. Zur Erhöhung der Reibkräfte werden mehrere kreisbogenförmige Schlitze aus dem Blech ausgestanzt bzw. ausgeschnitten, um auf diese Weise mehrere konzentrische Polflächen voneinander abzugrenzen. Reibflächenelemente aus einem Stück können auch in der Weise hergestellt werden, dass alle funktionalen geometrischen Strukturen im Wesentlichen beim Gießen des Bauteils ausgebildet werden. Darauffolgende Verfahrensschritte dienen nur noch dem Erreichen der gewünschten Genauigkeit der Endabmessungen des Bauteils, so dass nur noch relativ kleine Materialmengen abgetragen werden müssen.

Die Schrift EP1116895 offenbart eine Kupplungs- und/oder Bremsreibscheibe für Elektromagnetkupplungen und/oder Elektromagnetbremsen mit mindestens einem Reibflächenelement, das vom magnetischen Feld durchflutet wird, wobei in das Reibflächenelement mindestens ein kreisförmiger Schlitz ausgebildet ist, wodurch zwei Polflächenringe definiert werden, und wobei mindestens zwei Stege die Polflächenringe verbinden, und wobei der Schlitz abseits der Stege durchgehenden Luftspalten aufweist.

### Aufgabe und Vorteile der Erfindung

Aufgabe der vorliegenden Erfindung ist es, magnetisierbare Reibflächenelemente, wie sie als Reibscheiben in elektromagnetischen Kupplungen und Bremsen eingesetzt werden, einfach und kostengünstig bei nicht verschlechterten magnetischen Führungseigenschaften herzustellen.

Diese Aufgabe wird durch die Merkmale des Anspruchs 1 gelöst. Dabei kann das Verfahren vorteilhaft für nahezu alle praxisrelevanten Dimensionierungen und Geometrien des Reibflächenelements angepasst werden. Das Verfahren eignet sich insbesondere für die Herstellung mehrerer Varianten dieses Reibflächenelements bzw. kleinere Produktionsserien.

In den Unteransprüchen sind vorteilhafte und zweckmäßige Weiterbildungen der Erfindung angegeben.

Die Erfindung geht aus von einer z.B. flachen zylindrischen Ringscheibe, deren eine Seite als Reibfläche bestimmt ist und deren Oberfläche beispielsweise durch Drehen oder Schleifen hierfür geglättet wurde. Um an diese Fläche die Reibfläche eines zweiten Reibflächenelements magnetisch anziehen zu können, werden wenigstens zwei konzentrische Polbereiche magnetisch voneinander abgegrenzt. Der Kern der Erfindung liegt darin, dass in das Reibflächenelement von einer Reibkontaktfläche her mindestens ein kreisförmiger Schlitz durch maschinelle Drehbearbeitung eingeschnitten wird. Insbesondere reicht der Einschnitt des kreisförmigen Schlitzes nur bis zu einem Bruchteil der Materialstärke des Scheibenrohlings, beispielsweise der halben Scheibendicke. Die Drehbearbeitung bietet den Vorteil, dass im Vergleich zu ihrer Tiefe verhältnismässig schmale Schlitze erzeugt werden können. Damit wird die verbleibende Reibfläche durch die magnetische Abgrenzung der Polbereiche nur geringfügig reduziert.

Weil beim Drehvorgang das Werkstück nur von einer Richtung her bearbeitet wird, wobei das abgetragene Material in die entgegengesetzte Richtung abtransportiert wird, wirkt sich die Dicke des Materials, das nicht eingeschnitten wird, nicht auf die Bearbeitung aus. Dies bietet den Vorteil, dass für die Höhe der zylinderförmigen Ausgangsform keine obere Grenze besteht.

Bei der Drehbearbeitung kann der Führungsweg des Schneidwerkzeugs von einer Führungsrichtung parallel zur Drehachse abweichen. Dadurch ergibt sich der Vorteil, dass ein kreisförmiger Schlitz mit einem radialen Querschnittsprofil eingeschnitten werden kann, das von der Form eines Rechtecks abweichen und beispielsweise einer Trapezform entsprechen kann.

Aufgrund der kontinuierlich rotierenden Arbeitsbewegung beim Drehen können die Kreisschlitze mit hoher geometrischer Genauigkeit eingeschnitten werden. Dabei werden die Schlitze von Wänden mit geringer Oberflächenrauhigkeit begrenzt. Dies erweist sich für die Herstellung der Reibflächenelemente insofern als vorteilhaft, als die magnetische Durchflutung der Polflächen trotz geringer Schlitzbreite kaum durch Streufluss innerhalb der Schlitze beeinträchtigt und die Gefahr der Rissbildung verringert wird.

Verfahrensbedingt werden die Schlitze entlang des gesamten Kreisumfangs in die Polfläche eingeschnitten. Daher wird nahe der Reibkontaktebene zwischen den Polflächen der Verbleib von Materialbrücken vermieden. Dies verhindert Ungleichmäßigkeiten des magnetischen Feldverlaufs und ungleichmäßige Reibkräfte entlang der Ränder der Polflächen. Entsprechend wird unregelmäßiger Verschleiß weitgehend vermieden bzw. minimiert.

Gegenüber der Bearbeitung z.B. mit einem Laser bietet das maschinelle Drehen den weiteren Vorteil der geringeren thermischen Einwirkung auf das verbleibende Material nahe der Bearbeitungszone. Unerwünschte Nebeneffekte wie beispielsweise Randzonenaufhärtung und Anlagerungen aufgeschmolzenen Materials an unerwünschten Stellen werden somit vorteilhaft vermieden.

In einer vorteilhaften Ausführung der Erfindung wird die axiale Dicke von magnetisch getrennten Teilen des Reibflächenelements zumindest mehrheitlich bzw. überwiegend durch den eingedrehten Schlitz bestimmt. Aus den magnetischen Eigenschaften des Scheibenmaterials kann eine Dimensionierung des Reibflächenelements ermittelt werden, die die magnetischen und mechanischen Anforderungen an das Bauteil optimal aufeinander abstimmt. Aufgrund ihrer Genauigkeit kann die Drehbearbeitung vorteilhaft an die Geometrie eines so dimensionierten Reibflächenelements für eine schnelle und Material sparende Bearbeitung abgepasst werden.

In einer weiteren vorteilhaften Ausführung der Erfindung wird die magnetische Trennung in radialer Richtung von benachbarten Teilen des Reibflächenelements im wesentlichen durch den in axialer Richtung von der Reibkontaktfläche bis zu den Stegen einfach zusammenhängenden Raum des eingeschnittenen Schlitzes erzeugt. Der so geschaffene Abstand zwischen der Reibkontaktfläche und magnetisch leitfähigen Verbindungen zwischen den Teilen des Reibflächenelements verringert wirkungsvoll den Einfluß, den magnetische Brücken auf die Bündelung und Führung des magnetischen Flusses nahe der Polflächen nehmen können. Somit wird die magnetische Anziehungskraft vorteilhaft erhöht und der Reibungskraftschluss für die Drehmomentübertragung verbessert.

Des Weiteren wird bevorzugt, dass ein Reibflächenelement von der Rückseite her teilweise ausgespart wird. Dabei werden zur Verkürzung der Bearbeitungszeit Aussparungen mit größeren, zusammenhängenden Materialvolumen beispielsweise mit Hilfe eines gröberen Fräswerkzeugs abgetragen. Insbesondere das Material wird dabei entfernt, das einerseits für die mechanische Stabilität des Reibflächenelements nicht benötigt wird und andererseits aufgrund seiner weichmagnetischen Eigenschaft als unerwünschte magnetische Brücken den magnetischen Fluss abseits der Polflächen kurzschließt. Weiterhin kann auf diese Weise das Gewicht des Bauteils auf ein notwendiges Maß reduziert und überdies das Reibflächenelement an räumliche Gegebenheiten an seinem Einbauort angepasst werden.

In einer weiteren vorteilhaften Anwendung der Erfindung dringt eine Aussparung von der Rückseite so weit ein, dass das Material des Reibflächenelement bis zu dem eingeschnittenen Schlitz durchbrochen wird. Somit bildet der Schlitz in diesen Bereichen Luftspalte, die in axialer Richtung von der Ebene der Polflächen bzw. Reibkontaktflächen bis zur Rückseite des Reibflächenelements ununterbrochen durchreichen. Hierdurch wird der magnetische Widerstand zwischen den benachbarten Polflächen, die durch den Schlitz getrennt sind, wirkungsvoll erhöht. Der Wirkungsgrad der Elektromagnetkupplung bzw. - bremse kann entsprechend verbessert werden. Weil das Bauteil in diesem Verfahrensschritt von der der Reibkontaktebene entgegengesetzten Seite her bearbeitet wird, können für die Bearbeitung verschiedene Methoden und Werkzeuge unabhängig von den Genauigkeitsanforderungen auf der Seite der Reibkontaktflächen eingesetzt werden.

Vorzugsweise kann die Erfindung in der Weise angewandt werden, dass in die Reibkontaktfläche eines Reibflächenelements ein zweiter konzentrischer kreisförmiger Schlitz durch maschinelles Drehen eingeschnitten wird, so dass zwischen der radial äußersten und der innersten Polfläche ein magnetisch isolierter Polflächenring ausgebildet wird. Durch geeignete Anordnung magnetischer Widerstände im angreifenden gegenüberliegenden Reibflächenelement kann hierdurch der magnetische Fluss gezwungen werden, durch größere Flächenbereiche der Polflächen nahezu senkrecht hindurchzutreten, so dass sich der Kraftschluss an der Reibkontaktfläche erhöht. Die Genauigkeit des maschinellen Drehens erweist sich hierbei in der Weise als Vorteil, dass dieser Schritt auch mit Reibflächenelementen kleineren Durchmessers im Vergleich zu anderen Verfahren durchführbar ist.

In einer besonders bevorzugten Variante des erfindungsgemäßen Verfahrens wird auf der der Reibkontaktfläche gegenüberliegende Seite des selben Reibflächenelements so viel Material abgetragen, dass mehrere, insbesondere nur noch zwei radial verlaufende Stege den Polflächenring mit dem übrigen Reibflächenelement verbinden. Hieraus ergibt sich der Vorteil, dass an einem Reibflächenelement nur noch das Material verbleibt, das entweder eine optimale Führung des magnetischen Flusses gewährleistet oder das für die mechanische Stabilität und Zuverlässigkeit des Reibflächenelements erforderlich ist. Da der Polflächenring mit Ausnahme der Verbindungsstege durch Luftspalte von den benachbarten Polflächen getrennt wird und die Verbindungsstege selbst nicht an die Ebene der Reibkontaktfläche heranreichen, gestattet das Verfahren auf vorteilhafte Weise den Polflächenring innerhalb seines Reibflächenelements magnetisch zu isolieren. Hierdurch wird der mehrfache Wechsel des magnetischen Flusses in radialer Richtung zwischen zwei angreifenden Reibflächenelementen unterstützt und die Anziehungskraft zwischen zwei Reibflächenelementen in vorteilhafter Weise zusätzlich erhöht.

Weiterhin wird bevorzugt, dass die kreisförmigen Schlitze, die die Polflächen voneinander trennen, mit gleichmäßiger Tiefe hergestellt werden. Hierdurch wird erreicht, dass sich die magnetischen Feldlinien in der Ebene der Reibkontaktfläche entlang der kreisförmigen Schlitze nur wenig verändern und vom magnetischen Kurzschluss, den die verbliebenen Stege bilden, kaum beeinflusst werden. Dies bietet den Vorteil, dass über die gesamte Fläche eines Polflächenrings eine recht gleichmäßige Kraftwirkung herrscht, wodurch die Gefahr einseitiger Abnutzung verringert wird.

In einer besonders vorteilhaften Ausführung des erfindungsgemäßen Verfahrens wird auf der der Reibkontaktfläche entgegengesetzten Seite eines Reibflächenelements Material beispielsweise durch maschinelles Drehen abgetragen. So kann vorteilhaft eine innere und eine äußere zylindrische Wand in axialer Richtung ausgebildet werden. Dabei werden insbesondere die äußere Mantelfläche der inneren Wand und die innere Mantelfläche der äußeren Wand so herausgearbeitet, dass zwischen diesen Flächen berührungsfrei die Windungen eines Elektromagneten, mit dem die Kupplung und/oder die Bremse betätigt wird, verlaufen. Anschließend werden Ausnehmungen zur Herstellung der Stegelemente durch Fräsen herausgearbeitet.

Es ist außerdem von Vorteil, dass die der Reibkontaktfläche gegenüberliegenden konstruktiven geometrischen Strukturen eines Reibflächenelements beispielsweise mittels Gießen und/oder Schmieden mit überstehendem Materialvolumen in einem Rohling vorgeformt werden. Dies ermöglicht, bei der Materialabtragung für die endgültige Formgebung des Bauteils die Werkzeugabnutzung zu verringern und die Bearbeitungszeiten zu verkürzen. Insbesondere die Formung des Rohlings durch Schmieden bietet sich vorteilhaft an, weil hierdurch die Belastbarkeit des Reibflächenelements erhöht und die Gefahr der Rißbildung reduziert werden kann.

Im Weiteren ist es bevorzugt, dass die Materialstärke der Polflächenringe durch maschinelle Drehbearbeitung von der Reibkontaktfläche her in einem Bereich verringert wird, wobei der Bereich zu einem Polflächenschlitz in einer Reibkontaktfläche eines gegenüberliegend angeordneten Reibflächenelements in axialer Richtung betrachtet zumindest teilweise überdeckend positioniert ist. Hierbei ist es vorteilhaft, wenn durch maschinelle Drehbearbeitung nur so viel Material abgetragen wird, dass ein vorgegebener Durchflutungsquerschnitt in radialer Richtung für den magnetischen Fluss nicht unterschritten wird. Dabei wird die Bündelung und Führung des magnetischen Flusses verbessert, so dass sich die magnetische Anziehungskraft im Bereich der Polflächen erhöht. Besonders vorteilhaft ist es, wenn ein solcher Bereich reduzierter Materialstärke sich über eine radiale Ausdehnung erstreckt, die genau einen Schlitz in dem zweiten mitwirkenden Reibflächenelement überdeckt. Hierdurch wird eine besonders wirkungsvolle Führung des magnetischen Flusses erreicht und gleichzeitig der für den Reibkontakt zur Verfügung stehende Flächenanteil in der Reibkontaktfläche optimal ausgenutzt.

### Ausführungsbeispiel

Als Beispiel für die Ausführung des erfindungsgemäßen Verfahrens wird im Folgenden die Herstellung der Reibflächenelemente für eine Elektromagnetkupplung anhand der Abbildungen beschrieben. Als Reibflächenelemente besitzt die beispielhafte Kupplung einen Rotor und eine Ankerscheibe. Ihr Einbau sowie die Ausführung ihres Antriebs bzw. Abtriebs werden hier nicht dargestellt. Bei beiden Reibflächenelementen übernehmen die Polflächen zugleich die Funktion der Reibkontaktflächen.

Hierbei zeigt
- Figur 1a: eine perspektivische Ansicht einer halbierten Ankerscheibe mit Blick auf die Reibkontaktfläche,
- Figur 1b: eine perspektivische Ansicht der halbierten Ankerscheibe von der Rückseite bezogen auf die Reibkontaktfläche,
- Figur 2a: eine perspektivische Ansicht eines halbierten Rotors mit Blick auf die Reibkontaktfläche,
- Figur 2b: eine perspektivische Ansicht des halbierten Rotors von der Rückseite bezogen auf die Reibkontaktfläche,

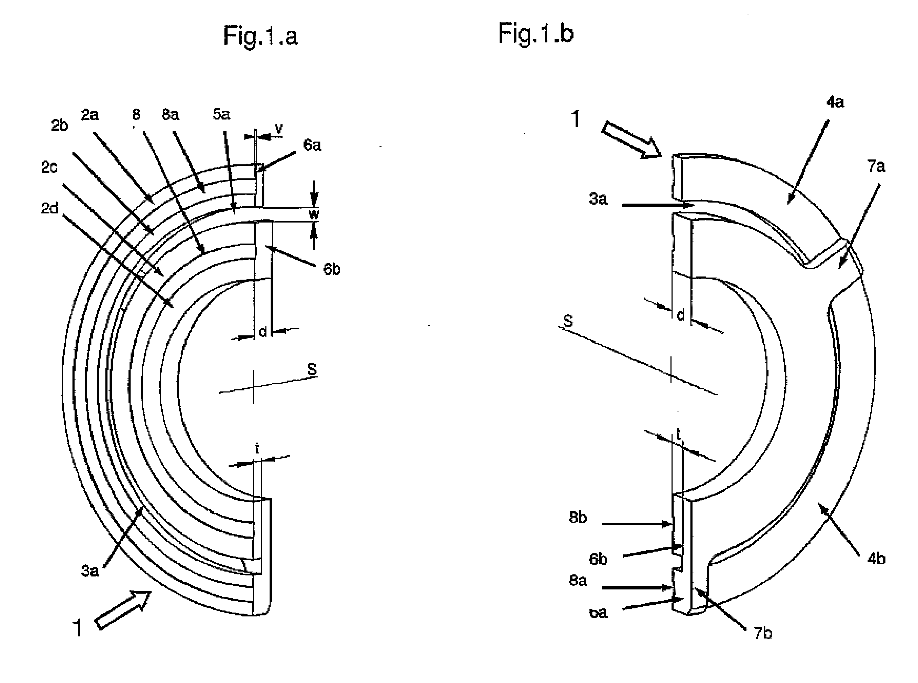

In den Figuren 1a und 1b ist eine Ankerscheibe 1 dargestellt, die nach dem erfindungsgemäßen Verfahren hergestellt wurde. Vorzugsweise wird für ihre Herstellung von einem Rohling in der Form eines zylindrischen Scheibenrings, beispielsweise durch Stanzen oder Gießen hergestellt, ausgegangen. Eine Seite des Scheibenrings wird z.B. durch Drehen als Reibkontaktfläche vorbereitet, so dass die Materialstärke der Dicke d entspricht.

Die Ankerscheibe 1 weist eine Reibkontaktfläche 2a - 2d auf. Von einer Ebene der Reibkontaktfläche 2a - 2d ist ein kreisförmige Schlitz 3a durch maschinelles Drehen in Richtung der Zylinderachse eingeschnitten. Hierdurch werden zwei Polflächenringe 6a, 6b definiert. Der Schlitz 3a ist in eine vorbestimmte Tiefe t des Scheibenvolumens eingearbeitet, die hier etwa der halben Dicke d des Scheibenrings entspricht. Der radiale Querschnitt des Schlitzes beschreibt ein Rechteck, wobei die kürzere Seite des Rechtecks der Breite w der Schlitze entspricht. An den Polflächenringen 6a, 6b sind zwischen den Polflächen 2a, 2b und 2c, 2d die Bereiche der Vertiefungen 8a, 8b erkennbar, die der verbesserten Führung des magnetischen Flusses dienen.

In Figur 1b wird die Rückseite der Ankerscheibe 1 nach dem Herausfräsen der Aussparungen 4a, 4b gezeigt. Dabei wurden die Aussparungen 4a, 4b z.B. durch Fräsen soweit vorangetrieben, dass der kreisförmige Schlitz 3a teilweise zu einem durchgehenden Luftspalt z.B. 5a durchbrochen wird. Hierdurch werden Polflächen tragende Bereiche zu freistehenden Polflächenringen 6a und 6b , die nur noch über die Stege 7a, 7b miteinander verbunden sind.

In Fig. 1b sind mehrere Verbindungsstege 7a, 7b erkennbar, von denen die Ankerscheibe insgesamt drei Stück aufweist. Sie verbinden den äußeren Polflächenring 6a mit dem inneren 6b an der Rückseite der Ankerscheibe 1. In der Figur 1b verläuft der dargestellte Schnitt entlang der Zylinderachse durch einen Stege 7b. Die Schnittdarstellung lässt dabei erkennen, dass durch den Einschnitt des Kreisschlitzes 3a in die Reibkontaktfläche alle Stege 7a, 7b zum Inneren der Ankerscheibe hin um einen Abstand versetzt sind, der gerade der Tiefe t des Einschnitts des Schlitzes 3a entspricht. Die Polflächen 2a - 2d der Ankerscheibe stellen magnetische Dipole dar, weil sie den magnetischen Fluss von einer Polfläche eines Rotors aufnehmen, um ihn an eine benachbarte, durch einen Schlitz magnetisch isolierte Polfläche eines Rotors weiterzuleiten. Daher kann die Führung des magnetischen Flusses dadurch verbessert werden, dass die Polfläche in dem Bereich, der dem kreisförmigen Schlitz zwischen den Polflächen eines Rotors gegenüber liegt, ein wenig vertieft wird. Solche Vertiefungen 8a, 8b sind in den Polflächenringen 6a, 6b abgebildet. Verglichen mit der Tiefe t des kreisförmigen Schlitzes 3a ist die Tiefe v des vertieften Bereichs in den Polflächenringen 6a, 6b sehr viel kleiner, da durch diese Maßnahme der magnetische Fluß nicht behindert werden darf.

Allerdings steht dem magnetischen Fluß mit zunehmendem Radius ein proportional zunehmender zylindermantelförmiger Querschnitt zur Verfügung. Daher kann die Dicke der Polflächenringe 6a, 6b nach aussen hin entsprechend reduziert werden, indem z.B durch Fräsen Material von der Rückseite her entfernt wird. Daher weist der Polflächenringe 6a der Ankerscheibe 1 eine geringere Materialstärke als der Polflächenring 6b auf.

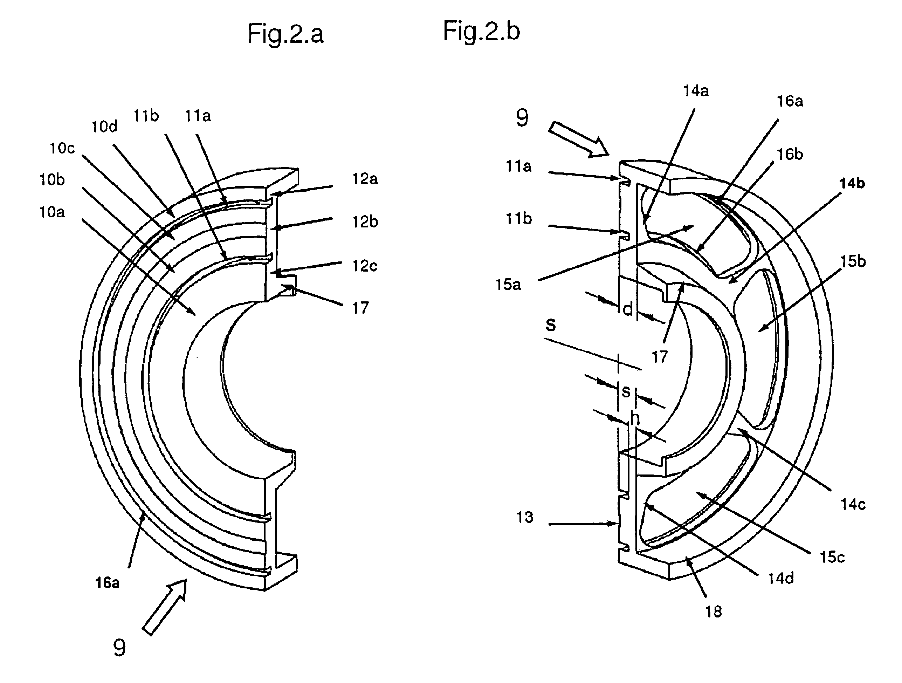

Die Figuren 2a und 2b zeigen einen Rotor 9, der mit dem erfindungsgemäßen Verfahren hergestellt werden kann. Die Reibkontaktfläche 10 des Rotors 9 weist eine ähnliche Strukur wie die der Ankerscheibe 1 in der Figuren 1a auf. Zwei mit gleicher Tiefe s in die Reibkontaktfläche 10a - 10d eingeschnittene kreisförmige Schlitze 11a und 11b teilen die Reibkontaktfläche in drei Polflächenringe 12a, 12b und 12c auf, wobei der mittlere Polflächenring 12b eine kreisförmige Vertiefung 13 zur Führung des magnetischen Flußes zwischen den beiden Polflächen 10b und 10c aufweist.

Der Rotor 9 besitzt insgesamt sechs Stege, von denen vier Stück 14a, 14b, 14c, 14d zumindest zum Teil in Figur 2b dargestellt sind. Sie werden teilweise z.B. durch Fräsen der Aussparungen 15a, 15b, 15c hergestellt. Der Rotor besitzt insgesamt auch sechs Aussparungen, von denen drei Aussparungen 15a - 15c in Figur 2b gezeigt werden. Der Vergleich der Figuren 1b und 2b verdeutlicht die Möglichkeit, durch Fräsbearbeitung die Ausparungen 4a, 4b bzw. 15a - 15c und die Stege 7a, 7b bzw. 14a - 14d in der Rückseite von Reibflächenelementen in ihrer Gestalt bestimmten mechanischen und magnetischen Anforderungen anzupassen.

In den Ausparungen 15a - 15c wird das Material soweit entfernt, dass außerhalb des Bereichs der Stege 14a - 14d von der Reibkontaktfläche bis zur Rückseite durchgehende Luftspalte 16a, 16b entstehen. Die Schnittdarstellung entlang der Rotorachse verläuft durch die beiden Stege 14a, 14d und läßt erkennen, dass alle Stege 14a - 14d zwischen den Polflächenringen 12a - 12c aufgrund des Einschnitts der kreisförmigen Schlitze 11a, 11b einen entsprechenden Abstand s von der Reibkontaktfläche aufweisen.

Die Ansicht der Figur 2b zeigt die Verbindungsstege 14a - 14d des Rotors sowie den U-förmigen Ringkanal, der von der inneren zylindrischen Wand 17 und der äußeren 18 umgeben wird. Der ringförmige Kanal ist für die berührungsfreie Aufnahme der Spulenwindungen eines Elektromagneten vorgesehen. Die innere Wand 17 und die äußere 18 bündeln den vom stromdurchflossenen Elektromagneten erzeugten magnetischen Fluß und richten ihn auf den Bereich der Reibkontaktfläche. Um die Spule möglichst eng, jedoch berührungsfrei zu umgeben, werden diese Wände 17, 18 vorzugsweise durch maschinelles Drehen hergestellt. Die Tiefe des U-förmigen Kanals und damit der Drehbearbeitung in diesem Bereich wird durch die Dimensionierung und inbesondere durch die erforderliche Höhe h der Verbindungsstege 14a - 14d begrenzt.

### Bezugszeichenliste:

- 1: Ankerscheibe
- 2a, 2b, 2c, 2d: Reibkontakt- bzw. Polfläche
- 3a: kreisförmiger Schlitz
- 4a, 4b: Aussparung
- 5a: Luftspalt
- 6a, 6b: Polflächenring
- 7a, 7b: Verbindungssteg
- 8a, 8b: Vertiefung
- 9: Rotor
- 10a, 10b, 10c, 10d: Reibkontakt- bzw. Polflächen
- 11a, 11b: kreisförmiger Schlitz
- 12a, 12b, 12c: Polflächenring
- 13: Vertiefung
- 14a, 14b, 14c, 14d: Verbindungssteg
- 15a, 15b, 15c: Aussparung
- 16a, 16b: Luftspalt
- 17: innere Wand
- 18: äußere Wand

## Patentansprüche

1. Verfahren zur Herstellung von Kupplungs- und/oder Bremsreibscheiben für Elektromagnetkupplungen und/oder Elektromagnetbremsen mit mindestens einem Reibflächenelement, das vom magnetischen Feld durchflutet wird,
wobei in das Reibflächenelement von einer Reibkontaktfläche her mindestens ein kreisförmiger Schlitz durch maschinelle Drehbearbeitung eingeschnitten wird, wodurch zwei Polflächenringe definiert werden, und dass von der der Reibkontaktfläche gegenüberliegenden Seite her aus dem Reibflächenelement mindestens zwei Stege, die die Polflächenringe verbinden, so herausgearbeitet werden, dass der von der Reibkontaktfläche her eingeschnittene Schlitz abseits der Stege zu durchgehenden Luftspalten durchbrochen ist.

2. Verfahren nach Anspruch 1, **dadurch gekennzeichnet, dass** eine axiale Dicke von magnetisch getrennten Teilen des Reibflächenelements zumindest mehrheitlich bzw. überwiegend durch den eingedrehten Schlitz bestimmt wird.

3. Verfahren nach einem der vorgenannten Ansprüche, **dadurch gekennzeichnet, dass** die magnetische Trennung in radialer Richtung von benachbarten Teilen des Reibflächenelements im wesentlichen durch den in axialer Richtung von der Reibkontaktfläche bis zu den Stegen einfach zusammenhängenden Raum des eingeschnittenen Schlitzes erzeugt wird.

4. Verfahren nach einem der vorgenannten Ansprüche, **dadurch gekennzeichnet, dass** das Reibflächenelement von der Rückseite her teilweise ausgespart wird.

5. Verfahren nach einem der vorgenannten Ansprüche, **dadurch gekennzeichnet, dass** eine Aussparung von der Rückseite so weit eindringt, dass das Material des Reibflächenelements bis zu dem eingeschnittenen Schlitz durchbrochen wird.

6. Verfahren nach einem der vorgenannten Ansprüche, **dadurch gekennzeichnet, dass** zwei konzentrische Schlitze in das Reibflächenelement eingeschnitten werden, um einen Polflächenring in der Reibkontaktfläche zu definieren.

7. Verfahren nach einem der vorgenannten Ansprüche, **dadurch gekennzeichnet, dass** ein kreisförmiger Schlitz mit gleichmäßiger Tiefe hergestellt wird.

8. Verfahren nach einem der vorgenannten Ansprüche, **dadurch gekennzeichnet, dass** ein radiales Schnittprofil auf der der Reibkontaktfläche abgewandten Seite U-förmig ausgebildet wird.

9. Verfahren nach einem der vorgenannten Ansprüche, **dadurch gekennzeichnet, dass** der Reibkontaktfläche gegenüberliegende konstruktive, geometrische Strukturen mittels Gieß-, Press- bzw. Fräsverfahren mit überstehendem Materialvolumen in einem Körper (Rohling) vorgeformt und damit für die Verfahrensschritte vorbereitet werden.

10. Verfahren nach einem der vorgenannten Ansprüche, dadurch gekennzeichet, dass die Materialtiefe der Polflächenringe durch maschinelle Drehbearbeitung von der Reibkontaktfläche her in dem Bereich verringert wird, der einem Polflächenschlitz in der Reibkontaktfläche eines gegenüberliegenden Reibflächenelements gegenübersteht.

## Claims

1. Method for producing clutch and/or brake friction discs for electromagnetic clutches and/or electromagnetic brakes with at least one friction surface element, through which the magnetic field flows, wherein at least one circular slot is cut by lathe turning in the friction surface element from a friction contact surface, whereby two pole surface rings are defined, and in that at least two webs, which connect the pole surface rings, are worked out from the friction surface element from the side opposite the friction contact surface in such a way that the slot cut from the friction contact surface is interrupted remote from the webs to form continuous air gaps.

2. Method according to claim 1, **characterised in that** an axial thickness of magnetically isolated parts of the friction surface element are determined at least for the major part or predominantly by the lathed slots.

3. Method according to any one of the aforementioned claims, **characterised in that** the magnetic isolation in the radial direction of adjacent parts of the friction surface element is substantially produced by the space in the cut slot, which space is simply continuous in the axial direction from the friction contact surface up to the webs.

4. Method according to any one of the aforementioned claims, **characterised in that** the friction surface element is partially recessed from the rear.

5. Method according to any one of the aforementioned claims, **characterised in that** a recess from the rear penetrates so far that the material of the friction surface element is interrupted up to the cut slot.

6. Method according to any one of the aforementioned claims, **characterised in that** two concentric slots are cut into the friction surface element in order to define a pole surface ring in the friction contact surface.

7. Method according to any one of the aforementioned claims, **characterised in that** a circular slot is produced with a uniform depth.

8. Method according to any one of the aforementioned claims, **characterised in that** a radial cut profile is formed in a U-shape on the side remote from the friction contact surface.

9. Method according to any one of the aforementioned claims, **characterised in that** constructional, geometric structures opposite the friction contact surface are preformed by means of casting, pressing or milling methods with a protruding volume of material in a body (blank) and therefore prepared for the method steps.

10. Method according to any one of the aforementioned claims, **characterised in that** the material depth of the pole surface rings is reduced from the friction contact surface by lathe turning in the region, which is opposite a pole surface slot in the friction contact surface of an opposite friction surface element.

## Revendications

1. Procédé pour la fabrication de disques d'embrayage et/ou de disques de frein pour des embrayages électromagnétiques et/ou des freins électromagnétiques avec au moins un élément à surface de friction qui est traversé par un champ magnétique, au moins une rainure circulaire étant réalisée par tournage mécanique dans l'élément à surface de friction en partant d'une surface de contact par friction et définissant ainsi deux anneaux de surfaces polaires, et au moins deux entretoises reliant les anneaux de surfaces polaires sont préparés dans l'élément à surface de friction depuis la face opposée à la surface de contact par friction de telle sorte que la rainure réalisée depuis la surface de contact par friction est percée au-delà des entretoises en formant des fentes d'air traversantes.

2. Procédé selon la revendication 1, **caractérisé en ce qu'**une épaisseur axiale de parties séparées magnétiquement de l'élément à surface de friction est définie en majorité ou principalement par la rainure tournée.

3. Procédé selon l'une des revendications précédentes, **caractérisé en ce que** la séparation magnétique en direction radiale de parties adjacentes de l'élément à surface de friction est réalisée essentiellement par l'espace de la rainure réalisée simplement d'un seul tenant en direction axiale depuis la surface de contact par friction jusqu'aux entretoises.

4. Procédé selon l'une des revendications précédentes, **caractérisé en ce que** l'élément à surface de friction est en partie évidé depuis la face arrière.

5. Procédé selon l'une des revendications précédentes, **caractérisé en ce qu'**un évidement de la face arrière pénètre suffisamment profondément pour que le matériau de l'élément à surface de friction soit percé jusqu'à la rainure préparée.

6. Procédé selon l'une des revendications précédentes, **caractérisé en ce que** deux rainures concentriques sont réalisées dans l'élément à surface de friction pour définir un anneau de surface polaire dans la surface de contact par friction.

7. Procédé selon l'une des revendications précédentes, **caractérisé en ce qu'**une rainure circulaire d'une profondeur régulière est réalisée.

8. Procédé selon l'une des revendications précédentes, **caractérisé en ce qu'**un profilé de coupe radial est réalisé en forme de U sur la face opposée à la surface de contact par friction.

9. Procédé selon l'une des revendications précédentes, **caractérisé en ce que** des structures géométriques constructives opposées à la surface de contact par friction sont préformées par des procédés de coulage, pressage ou fraisage dans un corps (flan) avec des volumes de matière en saillie et sont ainsi préparées pour les étapes du procédé.

10. Procédé selon l'une des revendications précédentes, **caractérisé en ce que** l'épaisseur de matière des anneaux de surfaces polaires est diminuée par tournage mécanique depuis la surface de contact par friction dans la zone qui fait face à une rainure de surface polaire dans la surface de contact par friction d'un élément à surface de friction situé en face.
